# EUROPÄISCHE PATENTSCHRIFT

(11) **EP 4 182 110 B1**
(45) Veröffentlichungstag und Bekanntmachung des Hinweises auf die Patenterteilung: **18.11.2026**
(21) Anmeldenummer: 21743403.4
(22) Anmeldetag: 08.07.2021
(51) Int. Cl.: B23B 25/02, B23B 29/12

(54) **AKTOR, WERKZEUGMASCHINE UND VERFAHREN ZUM SPANENDEN BEARBEITEN**
ACTUATOR, MACHINE TOOL, AND MACHINING METHOD
ACTIONNEUR, MACHINE-OUTIL ET PROCÉDÉ D'USINAGE PAR ENLÈVEMENT DE COPEAUX

(30) Priorität: 16.07.2020 DE 102020208876
(43) Veröffentlichungstag der Anmeldung: 24.05.2023
(73) Patentinhaber: Fraunhofer-Gesellschaft zur Förderung der angewandten Forschung e.V., 80686 München (DE); Schaeffler Technologies AG & Co. KG, 91074 Herzogenaurach (DE)
(72) Erfinder: RENTZSCH, Hendrik, 09126 Chemnitz (DE); GEORGI, Oliver, 09126 Chemnitz (DE); RÜGER, Carlo, 09126 Chemnitz (DE); SCHWARZE, Martin, 09126 Chemnitz (DE); PÄTZOLD, Holger, 96138 Burgebrach (DE); GOTTMANN, Ralf, 91489 Wilhelmsdorf (DE)
(74) Vertreter: Grünecker Patent- und Rechtsanwälte PartG mbB
(86) Internationale Anmeldenummer: PCT/EP2021/068982
(87) Internationale Veröffentlichungsnummer: WO 2022/013053

(56) Entgegenhaltungen:
- EP-A2- 1 052 057
- EP-A2- 1 647 360
- CN-A- 102 699 376
- DE-A1- 102015 101 167
- DE-A1- 3 421 973
- JP-A- 2009 190 119
- JP-U- S5 032 677
- US-A1- 2006 099 039

## Beschreibung

Die vorliegende Erfindung betrifft eine Werkzeugmaschine sowie ein Verfahren zum spanenden Bearbeiten eines Werkstückes unter Verwendung einer solchen Werkzeugmaschine.

Beim Spanen dringt die keilförmige Schneide des Zerspanwerkzeuges unter Aufwand von Energie in die Werkstückoberfläche ein. Sobald die im Werkstückmaterial auftretende Scherspannung hierbei die zugehörige Fließgrenze überschreitet, bildet sich infolge der Relativbewegung zwischen Werkstück und Werkzeug ein Span, der oberhalb des Berührpunktes über die Spanfläche des Schneidkeils abläuft.

Da es für das Wirkpaar Werkzeug /Werkstück meistens unerheblich ist, ob die Bewegung vom Werkstück oder vom Werkzeug ausgeht, wird bei der normativen Festlegung in der Regel davon ausgegangen, dass das Werkstück ruht und das Werkzeug allein die Bewegung ausführt. Die Bewegungen, die unmittelbar an der Spanentstehung beteiligt sind, heißen Hauptbewegungen. Diese sind die Schnittbewegung in Schnittrichtung und die Vorschubbewegung in Vorschubrichtung. Nicht unmittelbar an der Spanentstehung beteiligt sind die so genannten Nebenbewegungen, wie Anstell-, Rückstell-, Zustell- und Nachstellbewegungen.

Die Schnittbewegung in Schnittrichtung beschreibt den Bewegungsanteil zwischen Werkzeug und Werkstück, der während einer Umdrehung oder eines Hubes eine einmalige Spanannahme bewirken würde, wohingegen die Vorschubbewegung in Vorschubrichtung den zusätzlich zur Schnittbewegung in Schnittrichtung erforderlichen Bewegungsanteil beschreibt, um eine mehrmalige oder kontinuierliche Spanabnahme während mehrerer Umdrehungen oder Hübe zu realisieren. Die Vorschubbewegung in Vorschubrichtung verläuft in Abhängigkeit des Verfahrens entweder schrittweise oder stetig und kann gegebenenfalls aus mehreren Komponenten zusammengesetzt sein. Für einen bestimmten Schneidenpunkt wird die Schnittbewegung durch den Vektor der Schnittgeschwindigkeit v_{c} und die Vorschubbewegung durch den Vektor der Vorschubgeschwindigkeit v_{f} charakterisiert.

Die Spanform beschreibt die Form des Spans nach Verlassen der Wirkstelle. Die entstehende Spanform ist u. a. vom Werkstoff des Werkstückes, dem Schnittregime der Bearbeitung, insbesondere den Schnittwerten, und der Schneidengeometrie abhängig. Die günstigsten Späne sind Schraubenbruchspäne, Spiralbruchspäne und Spiralspanstücke. Sie lassen sich unter Aufrechterhaltung des Späneflusses leicht abtransportieren und besitzen eine hohe Spanraumzahl. So können Spänenester im Arbeitsraum vermieden und die Kollisionsgefahr/-risiko im Arbeitsraum der Maschine verringert werden.

Ungünstige Späne verursachen Prozessunsicherheiten in Form von Maschinenstillständen, Beschädigung der Werkstückoberfläche und Werkzeugbruch. Das Spanbruchverhalten muss robust gegen dynamische Prozesseinflüsse, wie z. B. Werkzeugverschleiß und Materialchargenschwankungen, sein. Konventionelle, an der Werkzeuggeometrie oder an Prozessparametern ansetzende Lösungen decken oft die komplexen Anforderungen an Bauteilqualität, Produktivität und günstiger Spanform nicht gemeinsam ab. Es entsteht ein Zielkonflikt. Neue Materialien führen dabei zu größeren Herausforderungen bezüglich des Spanbruchverhaltens.

Eine Verbesserung des Spanbruchs erhöht die Prozesssicherheit und damit die Wirtschaftlichkeit des spanenden Bearbeitungsverfahrens. In Einzelfällen, z. B. bei Innenbearbeitungsoperationen, besteht zudem ein Potential zur Steigerung der Schnittwerte und damit zur Erhöhung der Produktivität. Auch eine Verbesserung des thermischen Verhaltens und des Werkzeugverschleißes kann in Einzelfällen erreicht werden. Ferner kann eine höhere Spanraumzahl eine sekundäre vorteilhafte Folgeerscheinung sein.

Im Allgemeinen existieren viele Ansätze, um durch eine schwingungsunterstützte Zerspanung beim Drehen oder Bohren den Spanbruch zu verbessern, Verschleiß zu minimieren und die Bearbeitungsqualität und Wirtschaftlichkeit zu erhöhen. Die bekannten Lösungen unterscheiden sich v. a. im Hinblick auf ihre Frequenzbereiche und Anregungsrichtungen und auf die zugrundeliegenden Antriebskonzepte. Konzepte für die niederfrequente Schwingungsunterstützung erreichen im Vergleich zu hochfrequenten Anregungen größere Amplituden und sind somit für eine Verbesserung des Spanbruches geeignet. Insbesondere eine Anregung in Vorschubrichtung ist dazu geeignet die Spanungsdicke zu beeinflussen.

Eine durch niederfrequente Schwingung mit hohen Amplituden in Vorschubrichtung des Drehprozesses erzeugte überlagerte Schwingungsbewegung führt zu einer periodischen Änderung der Spanungsdicke. Der Span hat dadurch Bereiche mit kleiner und großer Dicke und bricht dadurch in definierter und reproduzierbarer Weise. Dieser kinematische Effekt ist deshalb robust gegenüber material- sowie prozessseitigen Einflüssen (z. B. Werkzeugverschleiß).

In diesem Zusammenhang bezieht sich die Offenbarung der EP 1 647 360 A1 auf eine Linsenbearbeitungsmaschine mit einem Maschinenbett, auf dem mindestens ein erster Werkzeughalter und ein eine Werkstückspindel aufweisender Werkstückhalter mit einer Rotationsachse angeordnet sind. Der erste Werkzeughalter weist mindestens einen dynamischen Werkzeuglinearantrieb mit einer parallel zur Rotationsachse verlaufenden ersten Oszillationsachse auf. Der Werkstückhalter weist mindestens einen dynamischen Linearantrieb in Richtung einer parallel zur ersten Oszillationsachse angeordneten zweiten Oszillationsachse auf.

Aus DE 34 21 973 A1 geht eine Werkzeugmaschine hervor, bei der ein Werkzeug-Versteller ein mit einem Steuerwerk verbundenes Übertragungssystem zum unmittelbaren Umformen eines elektrischen Ausgangssignales in korrespondierende lineare Bewegungen aufweist. Das Werkzeug ist mit dem Übertragungssystem für lineare Bewegung unmittelbar verbunden ist, sodass es dadurch das Werkstück zu einem geforderten, nicht gleichförmigen Oberflächenprofil bearbeitet. Als Übertragungssystem kann eine Ultraschall-Energieumwandler in der Form eines piezoelektrischen Kristalles oder ein Gleichstrom-Linearmotor zum Einsatz gelangen.

DE 10 2015 101 167 A1 zeigt eine Spindelanordnung einer Werkzeugmaschine, wobei mittels eines Aktuators eine Schwingungsanregung entlang einer Längsachse eines Rotors und einer Spindel erfolgt. Der Aktuator kann als hydraulischer Aktuator ausgeführt sein, wobei in dieser Druckschrift auch die Verwendung eines sonstigen, z. B. elektromechanischen, pneumatischen oder mechanischen, Aktuators zur Schwingungsanregung vorgeschlagen wird. Zudem lehrt diese Druckschrift die Verwendung von Festkörperelementen (insbesondere Membranlagern) als Lager für die Spindel bzw. den Rotor der Spindelanordnung.

Eine Schwingbearbeitungsvorrichtung, bei der ein Stellantrieb eine Welle drehend antreibt, wird in US 2006/099039 A1 gezeigt. Ein an der Welle angebrachter Bewegungsumwandlungsmechanismus in Form eines Schwingnockens oder einer Taumelscheibe wandelt die Drehbewegung in eine Hin- und Herbewegung um. Ein Übertragungsmechanismus überträgt diese Hin- und Herbewegung des Bewegungsumwandlungsmechanismus derart, dass sich eine Spindel zum Halten eines Bearbeitungswerkzeuges in ihrer axialen Richtung hin- und herbewegt.

Ein aus CN 102 699 376 A bekanntes Tieflochbohrgerät ist mit einem Vibrationsgenerator ausgerüstet. Dieser Vibrationsgenerator umfasst eine vibrierende Welle in einer hohlen Struktur und einen exzentrischen Gleitblockmechanismus vom Offset-Typ, wobei ein Ende der vibrierenden Welle mit einer Schneidstange versehen ist und das andere Ende mit einem Spanauslassrohr verbunden ist. Der durch einen Servomotor angetriebene exzentrische Gleitblockmechanismus vom Offset-Typ ist oberhalb der vibrierenden Welle angeordnet und mit der vibrierenden Welle durch einen Doppelstangenverbindungsmechanismus verbunden.

WO 2007/130161 A1 beschreibt ein Verfahren für die Schwingungsunterstützung ("Modulation-Assisted Machining") beim Drehen oder Bohren durch eine in den Werkzeughalter eingebaute Zusatzvorrichtung. Diese Zusatzvorrichtung ist gebildet durch einen magnetostriktiven oder piezomechanischen Erreger, der mit dem nicht rotierenden Werkzeug über eine Kugelkeilwelle fest verbunden ist. Der vorgeschilderte Aufbau gemäß WO 2007/130161 A1 kann in eine Werkzeugaufnahme eines bestehenden Bearbeitungszentrums integriert werden. Dadurch sollen Schwingungsamplituden von maximal 160 µm bei Schwingungsfrequenzen von bis zu 5 kHz erreicht werden.

In Anbetracht des Standes der Technik hat es sich die vorliegende Erfindung zur Aufgabe gemacht, eine Werkzeugmaschine zum spanenden Bearbeiten eines Werkstückes sowie ein entsprechendes Verfahren bereitzustellen, mit denen auf einfache und somit kostengünstige Weise deutliche Leistungsvorteile (Reduzierung von Ausfallzeiten und von Werkzeug- und Entsorgungskosten) bei der spanenden Bearbeitung von Werkstücken erzielt werden können.

Gelöst wird diese Aufgabe hinsichtlich der Werkzeugmaschine durch eine Werkzeugmaschine, insbesondere Dreh-, Fräs- oder Bohrmaschine, mit den Merkmalen des Patentanspruches 1 und hinsichtlich des Verfahrens durch ein Verfahren zum spanenden Bearbeiten eines Werkstückes mit den Merkmalen des Patentanspruches 10.

Im Einzelnen wird durch die vorliegende Erfindung eine Werkzeugmaschine zum spanenden Bearbeiten eines Werkstückes mittels mindestens eines relativ zum Werkstück bewegbaren Werkzeuges geschaffen, wobei in der erfindungsgemäßen Werkzeugmaschine ein Aktor aufgenommen ist, der einen Schaft, der mit dem mindestens einen Werkzeug koppelbar ist, eine aus mehreren Festkörpergelenken gebildete Festkörperanordnung zur elastischen Lagerung des Schaftes und eine Einrichtung zur Schwingungsanregung des Schaftes entlang der Längsachse des Schaftes umfasst.

Der in der erfindungsgemäßen Werkzeugmaschine aufgenommene Aktor besteht somit nur aus den folgenden drei Grundkomponenten: Schaft, Festkörperanordnung zur elastischen Lagerung des Schaftes und Einrichtung zur Schwingungsanregung des Schaftes.

Die Kopplung des aktorseitigen Schaftes mit dem maschinenseitigen Werkzeug und die Kopplung des Aktors mit der Werkzeugmaschine können jeweils auf unterschiedlichste Weise ausgeführt werden. Zum einen wäre hier in Bezug auf die Kopplung zwischen Aktor und Werkzeugmaschine beispielhaft, aber nicht einschränkend, eine Kopplungsschnittstelle in Form eines Spannsystems für Werkzeughalter oder einer VDI-Aufnahme zu nennen. Zum anderen wäre hier in Bezug auf die Kopplung zwischen Werkzeug und Schaft des Aktors beispielhaft, aber nicht einschränkend, eine optionale Schnittstelle mit Kühl- und/oder Schmierstoffübergabe zu nennen.

Die erfindungsgemäße Lagerung des Schaftes mittels Festkörpergelenken ist spiel-, reibungs- und wartungsfrei. Da bei diesen Festkörpergelenken die Schwingungsbewegung alleine durch elastische Verformung ermöglicht wird, gibt es nämlich vorteilhafterweise keine Relativbewegung kontaktierender Flächen. Dadurch werden gegenüber der aus dem Stand der Technik bekannten Aktorik für die schwingungsunterstützte spanende Bearbeitung von Werkstücken deutliche Verbesserungen hinsichtlich der Wärmeentwicklung und der Verschleißbeständigkeit erreicht. Die Festkörpergelenke sind dabei so ausgestaltet, dass sie eine hohe Nachgiebigkeit in der Schwingungsrichtung und eine hohe Steifigkeit in der dazu senkrechten Richtung besitzen. Diese Schwingungsrichtung entspricht der Längsachse des Schaftes, wobei die Festkörpergelenke entlang des Schaftes an geeigneten Lagerstellen vorgesehen sind. Wenn die Festigkeitsauslegung der Festkörpergelenke unter Berücksichtigung der Dauerfestigkeit erfolgt, haben diese Lagerstellen theoretisch eine unbegrenzte Lebensdauer. Zusätzliche Vorrichtungen zum Schmieren oder Kühlen dieser Lagerstellen sind nicht erforderlich.

Vorzugsweise ist bei einer Werkzeugmaschine, die zumindest einen vorgenannten Aktor und mindestens ein mit dem Schaft gekoppeltes Werkzeug umfasst, der zumindest eine Aktor derart angeordnet, dass die Längsachse des Schaftes mit einer Vorschubrichtung des mindestens einen Werkzeuges übereinstimmt.

Obgleich die Vorschubrichtung des mindestens einen Werkzeuges die bevorzugte Richtung der Schwingungseinleitung zur Beeinflussung der Spanungsdicke und damit Gewährleistung einer günstigen Spanform ist, kann der Aktor aber auch so angeordnet sein, dass die Längsachse des Schaftes zu dieser Vorschubrichtung leicht angestellt ist.

Gemäß einer bevorzugten Ausführungsform kann der Schaft mindestens eine Wechselschnittstelle zur auswechselbaren (lösbaren) Einspannung eines Werkzeuges aufweisen. Auf diese Weise kann der kompakt aufgebaute Aktor universell in verschiedenen Werkzeugmaschinen mit verschiedenen Einbausituationen verwendet und auch nachgerüstet werden. Erfindungsgemäß sind die Festkörpergelenke jeweils mit einer Vorspannung versehen. Nach einer weiteren besonders vorteilhaften Ausgestaltung der Erfindung können die Festkörpergelenke zu Paketen zusammengefasst sein.

Auf diese Weise wird eine einfache Möglichkeit geschaffen, um durch eine optimierte Positionierung und/oder Verschaltung und/oder Vorspannung der Festkörpergelenke die Steifigkeit der elastischen Lagerung und somit die Schwingungseigenschaften des Schaftes und des darin aufgenommenen Werkzeuges an die jeweiligen Bearbeitungsanforderungen anzupassen. Die Vorspannung ist zwar während des Betriebes nicht veränderlich, kann jedoch vorab auf die Prozessparameter und die Dauerfestigkeit der Festkörpergelenke abgestimmt werden.

Erfindungsgemäß umfasst die Einrichtung zur Schwingungsanregung einen rotatorischen Antrieb, wobei dieser Antrieb durch einen Antrieb der Werkzeugmaschine gebildet ist.

Der Aktor wird in besonders platz- und ressourcensparender Weise von dem Antrieb der Werkzeugmaschine angetrieben.

Bei einer besonders bevorzugten Ausführungsform der vorliegenden Erfindung ist vorgesehen, dass eine Frequenz der angeregten Schwingung mittels des Antriebes variabel einstellbar ist.

Insbesondere eine Änderung der Drehzahl und / oder des Drehmomentes des Antriebes eröffnet eine einfache und kostengünstige Möglichkeit, um die Frequenz der angeregten Schwingung auf einen definierten Wert einzustellen.

Erfindungsgemäß umfasst die Einrichtung zur Schwingungsanregung ein Getriebe, das die rotatorische Antriebsbewegung des Antriebes in eine Schwingungsbewegung in der Längsrichtung des Schaftes umwandelt.

Unter Zuhilfenahme des Getriebes ergibt sich somit aus einer rotatorischen Antriebsbewegung eine veränderbare translatorische Schwingungsbewegung des in Richtung der Längsachse des Schaftes zur Translationsschwingung angeregten Werkzeuges, wodurch eine Verbesserung der Spanbildung und -abfuhr und damit eine Steigerung der Prozesssicherheit und Produktivität erreicht werden kann.

Eine weitere vorteilhafte Weiterbildung der Erfindung sieht vor, dass Elemente des Antriebes und/oder des Getriebes in der gleichen horizontalen Ebene wie der Schaft liegen, insbesondere seriell mit dem Schaft gekoppelt sind, und / oder Elemente des Antriebes und / oder des Getriebes räumlich parallel oder kreuzend in Bezug auf den Schaft angeordnet sind.

Die Elemente des Antriebes bzw. des Getriebes können somit so angeordnet werden, dass der in der Werkzeugmaschine zur Verfügung stehende begrenzte Einbauraum optimal ausgenutzt wird. Ein serieller Aufbau bedeutet, dass die Achsen der betreffenden Antriebs- bzw. Getriebeelemente und die Achse des Schaftes nacheinander in einer horizontalen Ebene angeordnet sind. Ein räumlich paralleler oder kreuzender Aufbau bedeutet, dass die Achsen der betreffenden Antriebs- bzw. Getriebeelemente und die Achse des Schaftes auf zueinander parallel liegenden Ebenen verschiedener Höhe oder auf sich schneidenden Ebenen liegen.

Bei dem in der erfindungsgemäßen Werkzeugmaschine aufgenommenen Aktor ist das Getriebe über eine Kupplung mit dem Antrieb verbunden.

Darüber hinaus kann vorgesehen sein, dass die Kupplung als eine schaltbare Kupplung, wie eine elektromechanisch, hydraulisch oder pneumatisch schaltbare Zapfwelle, ausgebildet ist.

Durch eine schaltbare Kupplung, wie beispielsweise eine Zapfwelle, wird eine weitere Möglichkeit zur Verfügung gestellt, auf der Antriebsseite die Drehzahl und /oder das Drehmoment passend einzustellen, um auf der Abtriebsseite den Schaft und das darin aufgenommene Werkzeug zu einer Schwingung mit einer bestimmten Frequenz anzuregen, die einen möglichst schnellen und störungsfreien Dreh-, Fräs- oder Bohrfortschritt erlaubt.

Bei dem in der erfindungsgemäßen Werkzeugmaschine aufgenommenen Aktor ist vorgesehen, dass das Getriebe über eine Koppel mit einem Ende des Schaftes, der einem mit dem mindestens einen Werkzeug gekoppelten Ende des Schaftes gegenüberliegt, verbunden ist.

Die Koppel fungiert als Übertragungsglied, das bewegte Getriebeglieder mit dem sich in hin- und hergehender Bewegung befindlichen Schaft koppelt. Die Koppel setzt dabei die kreisförmige Bewegung der Getriebeglieder in eine lineare Bewegung des Schaftes um. Wegen der wechselnden Belastung ist die Koppel auf Dauerfestigkeit ausgelegt.

Die Erfindung zeichnet sich dadurch aus, dass das Getriebe in Form eines Schubkurbelgetriebes ausgebildet ist, wobei dieses Schubkurbelgetriebe einen vom Antrieb rotatorisch angetriebenen Doppelexzenter mit variabler Exzentrizität und eine Koppelstange, die über ein Festlager auf dem Doppelexzenter sowie über ein Loslager an der Koppel oder an einer mit der Koppel fest verbundenen Verbindungsstange drehbar gelagert ist, umfasst, und wobei die Koppelstange seriell oder parallel in Bezug zum Schaft angeordnet ist.

Ein solches Schubkurbelgetriebe stellt eine besonders einfache und dennoch zuverlässige Lösung dar, um die vom Antrieb (Elektromotor) erzeugte rotierende Bewegung in die Translationsbewegung des als Werkzeugträger fungierenden Schaftes umzusetzen. Ein zentraler Bestandteil dieses Schubkurbelgetriebes ist die Koppelstange, welche den Doppelexzenter und die am Schaftende angebrachte Koppel miteinander verbindet. Je nach dem in der Werkzeugmaschine zur Verfügung stehenden Einbauraum und der zu erfüllenden Bearbeitungsaufgabe kann die Anordnung der Koppelstange in Bezug zum Schaft seriell sein (d. h. die Achsen von Koppelstange und Schaft sind nacheinander in derselben horizontalen Ebene angeordnet) oder parallel sein (d. h. die Achsen von Koppelstange und Schaft sind in höhenversetzten Ebenen angeordnet).

Zur variablen Amplitudeneinstellung ist der Doppelexzenter mit einer variablen Exzentrizität ausgebildet. Diese Exzentrizität kann manuell, mit einem eigenen Antrieb oder über einen zusätzlichen Stellmotor verändert werden, um so die Amplitude der angeregten Schwingung auf einen gewünschten Wert einzustellen.

Schließlich kann eine weitere Ausbildung der Erfindung darin bestehen, dass der Aktor mit einer inneren Kühl- und/oder Schmierstoffzufuhr für das mindestens eine damit zu koppelnde Werkzeug ausgestattet ist.

Somit kann der Aktor auch als Werkzeughalter in Werkzeugmaschinen mit einer zentralen Kühl- und/oder Schmierstoffübergabe verwendet werden, um den Kühl-und/oder Schmierstoff kontinuierlich durch den Schaft hindurch an die Schneide des Werkzeuges zu leiten und stets eine optimale Kühlung und Schmierung der Schneide zu gewährleisten.

Nachstehend wird die Erfindung anhand der in der Zeichnung dargestellten Ausführungsbeispiele eingehend erläutert. Dabei zeigen:
Fig. 1 eine Prinzipskizze einer Werkzeugmaschine (Drehmaschine) gemäß einem ersten, nicht von der Erfindung umfassten Ausführungsbeispiel;
Fig. 2 eine Prinzipskizze einer Werkzeugmaschine (Drehmaschine) gemäß einem zweiten, von der Erfindung umfassten Ausführungsbeispiel;
Fig. 3 eine Prinzipskizze einer Werkzeugmaschine (Drehmaschine) gemäß einem dritten, nicht von der Erfindung umfassten Ausführungsbeispiel;
Fig. 4 eine Prinzipskizze einer Werkzeugmaschine (Drehmaschine) gemäß einem vierten, nicht von der Erfindung umfassten Ausführungsbeispiel.

Bevor auf die vier dargestellten Ausführungsbeispiele näher eingegangen wird, werden einleitend noch einige grundsätzliche Gemeinsamkeiten dieser Ausführungsbeispiele erläutert. Der Aktor 1 stellt eine in eine erfindungsgemäße Werkzeugmaschine einbaubare modulare Komponente dar, die in dieser Werkzeugmaschine nicht fest verbaut sein muss.

Allen Ausführungsbeispielen gemein ist, dass der Aktor 1 aus den folgenden drei Grundkomponenten besteht: einem Schaft 4 zur auswechselbaren Einspannung eines Zerspanwerkzeuges 3, einer Festkörperanordnung 7 aus mehreren Festkörpergelenken 6 zur elastischen Lagerung des Schaftes 4 im Maschinengestell sowie eine Einrichtung 8 zur Schwingungsanregung des Schaftes 4 und somit des darin eingespannten Zerspanwerkzeuges 3.

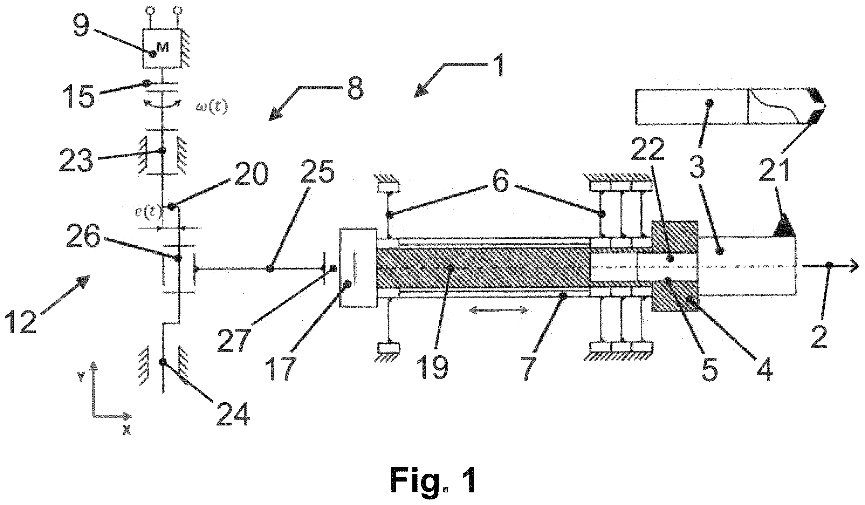

Wie bereits aus der obigen Kurzbeschreibung der Fig. 1 bis 4 zu entnehmen, ist der dargestellte Aktor 1 jeweils ein in einer Drehmaschine aufgenommener Aktor 1. Dementsprechend ist das im Schaft 4 eingespannte Zerspanwerkzeug ein Drehwerkzeug 3 (auch Drehmeißel genannt), das an seinem einen Ende mit aufgelöteten Hartmetallschneiden 21 ausgestattet ist und an seinem entgegengesetzten Ende einen durchmesserreduzierten Drehwerkzeugschaft 22 aufweist, der in eine entsprechende zylindrische Ausformung am stirnseitigen Ende des Schaftes 4 eingesetzt ist. Diese Ausformung dient als Wechselschnittstelle 5, in die für verschiedene Bearbeitungsaufgaben verschiedene Werkzeuge 3 auswechselbar (lösbar) eingespannt werden können.

Bei der spanenden Drehbearbeitung vollzieht das Drehwerkzeug 3 relativ zum Werkstück zwei Hauptbewegungen. Zum einen wird das (nicht gezeigte) Werkstück relativ zum Drehwerkzeug in Rotation versetzt, woraus eine geschlossene kreisförmige Schnittbewegung in Schnittrichtung resultiert. Zum anderen wird das Drehwerkzeug 3 in einer quer zur Schnittrichtung verlaufenden Vorschubrichtung 2 verfahren. Diese Vorschubbewegung erlaubt zusammen mit der Schnittbewegung eine stetige oder mehrmalige Spanabnahme während mehrerer Umdrehungen. Die Vorschubrichtung 2 verläuft in den Ausführungsbeispielen nach Fig. 1 bis 4 jeweils entlang der (strichpunktiert dargestellten) Längsachse 19 des Schaftes 4 und des darin eingespannten Werkzeuges 2. Zur Bildung einer günstigen Spanform, also insbesondere kurzer Schrauben- und Spiralbruchspäne, erfolgt die Schwingungseinleitung in den Schaft 4 und das darin aufgenommene Drehwerkzeug 3 in dieser Vorschubrichtung 2. Im Ergebnis liegt somit während der Drehbearbeitung eines Werkstückes in dieser Vorschubrichtung 2 nicht nur eine von der Werkzeugmaschine bereitgestellte translatorische Vorschubbewegung, sondern überlagert dazu auch eine vom Aktor 1 generierte Schwingungsbewegung des Drehwerkzeuges 3 vor.

Die beiden Hauptbewegungen (Schnittbewegung und Vorschubbewegung) sind jedoch auch bei anderen spanendenden Bearbeitungsverfahren anzutreffen, so dass der Aktor 1 in vorteilhafter Weise nicht nur in einer Drehmaschine, sondern als Werkzeughalter auch beispielsweise in einer Fräs- oder Bohrmaschine zur Anwendung kommen kann.

### Erstes Ausführungsbeispiel (nicht erfindungsgemäß)

Im Aktor 1 des ersten Ausführungsbeispieles nach Fig. 1 umfasst die Einrichtung 8 zur Schwingungsanregung einen rotatorischen Antrieb 9, der als separater Eigenantrieb des Aktors 1 ausgebildet ist. Dabei wird die rotatorische Antriebsbewegung des Antriebes 9 über eine Kupplung 15 an einen Doppelexzenter 20 mit variabler Exzentrizität e(t) eines Schubkurbelgetriebes 12 übertragen. Für die Lagerung des Doppelexzenters 20 sind zwei Lagerstellen, ein Festlager 23 und ein Loslager 24, vorgesehen, die den Doppelexzenter 20 gegenüber dem stillstehenden Maschinenteil in radialer und axialer Richtung abstützen und führen. Die Anordnung des Antriebes 9 ist derart gewählt, dass die Achse des Doppelexzenters 20 die nach hinten, vom eingespannten Drehwerkzeug 3 weg verlängerte Achse 19 des Schaftes 4 in senkrechter Richtung kreuzt.

Das Schubkurbelgetriebe 12 umfasst des Weiteren eine Koppelstange 25, die sowohl mittels eines Festlagers 26 auf dem Exzenter des Doppelexzenters 20 mit variabler Exzentrizität e(t) als auch mittels eines Loslagers 27 an einer Koppel 17 drehbar gelagert. Diese Koppel 17 ist mit ihrem Loslager 27 an einem der Wechselschnittstelle 5 gegenüberliegenden Ende des Schaftes 4 angebracht. Die Koppelstange 25 ist dabei in Bezug auf den Schaft 4 seriell positioniert, d. h. die Koppelstange 25 und der Schaft 4 sind nacheinander mit ihren Achsen 19 auf derselben horizontalen Ebene (x-y-Ebene) angeordnet. Auch die übrigen mechanischen Übertragungselemente des Antriebes 9 und des Schubkurbelgetriebes 12 liegen mit ihren Achsen jeweils auf derselben horizontalen Ebene (x-y-Ebene) wie die Achse 19 des Schaftes 4 und des Werkzeuges 3.

Im Ergebnis wird mit dem vorbeschriebenen Schubkurbelgetriebe 12 die rotatorische Antriebsbewegung des Antriebes 9 um eine Achse senkrecht zur Achse 19 des Schaftes 4 in eine translatorische Schwingungsbewegung des Schaftes 4 in Vorschubrichtung 2, also in Richtung der Längsachse 19 des Schaftes 4 umgewandelt. Diese der Vorschubbewegung der Werkzeugmaschine überlagerte Schwingungsbewegung in Vorschubrichtung 2 bewirkt eine verbesserte Spanbildung und somit eine erhöhte Werkzeugstandzeit und Fertigungsproduktivität.

Die aus mehreren Festkörpergelenken 6 bestehende Festkörperanordnung 7 bildet für den in Schwingung versetzten Schaft 4 eine spiel- und reibungsfreie elastische Lagerung und stellt somit eine deutliche Verbesserung hinsichtlich der Wärmeentwicklung und Verschleißbeständigkeit des Aktors 1 dar. Die Festkörpergelenke 6 sind dabei so ausgeführt, dass sie eine hohe axiale Nachgiebigkeit parallel zur Vorschubrichtung 2 und eine hohe radiale Steifigkeit senkrecht zur Vorschubrichtung 2 besitzen.

Neben der Drehzahl- und/oder Drehmomentsteuerung des Antriebes 9 zur variablen Frequenzeinstellung der angeregten Schwingung und /oder der (manuellen oder motorischen) Verstellung des Getriebes (12) zur variablen Amplitudeneinstellung der angeregten Schwingung bietet die Verschaltung und Verspannung der Festkörpergelenke 6 in der Festkörperanordnung 7 eine weitere Möglichkeit, die in den Schaft 4 eingebrachte Schwingung hinsichtlich verschiedenster Bearbeitungsanforderungen zu regulieren. Diese Verschaltung und Verspannung ist zwar im Betrieb nicht veränderbar. Durch eine geeignete Zusammenfassung mehrerer Festkörpergelenke 6 zu einem Paket, wie an der rechten (werkzeugseitigen) Lagerstelle des Schaftes 4 geschehen, und /oder durch das Versehen der Festkörpergelenke 6 mit einer jeweils geeigneten Vorspannung kann die axiale Nachgiebigkeit der elastischen Lagerung jedoch verändert werden, um die Konstruktion der Festkörperanordnung 7 vorab für verschiedenste Anwendungsfälle zu qualifizieren. Wenn die Festigkeitsauslegung der Festkörpergelenke 6 unter Berücksichtigung der Dauerfestigkeit stattfindet, haben die Lagerstellen theoretisch eine unbegrenzte Lebensdauer, sodass zusätzliche Einrichtungen zum Schmieren oder Kühlen der Lagerstellen gänzlich entfallen können.

### Zweites Ausführungsbeispiel (erfindungsgemäß)

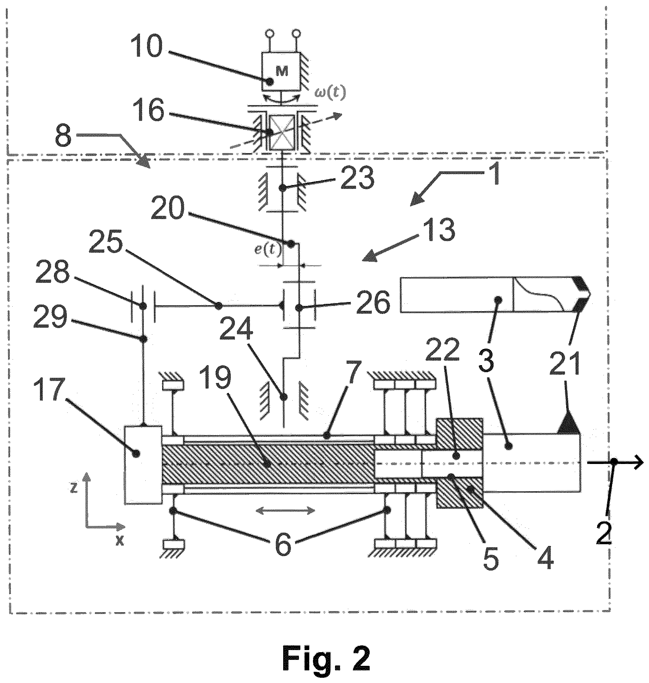

Das in Fig. 2 illustrierte zweite Ausführungsbeispiel des in einer Drehmaschine verbauten Aktors 1 weist zwar ebenfalls ein Schubkurbelgetriebe 13 auf, um die rotatorische Antriebsbewegung in eine translatorische Schwingungsbewegung des mittels Festkörpergelenken 6 elastisch gelagerten Schaftes 4 umzuwandeln. Jedoch ist der rotatorische Antrieb 10 hier nicht als ein separater Eigenantrieb des Aktors 1 ausgeführt, sondern ist durch einen Antrieb der Drehmaschine gebildet. So wäre es in diesem Zusammenhang denkbar, als rotarischen Antrieb 10 einen bestehenden angetriebenen Revolverplatz der Werkzeugmaschine zu verwenden. Dies wird in Fig. 2 mithilfe der strichpunktierten Umrandungen verdeutlicht, welche die bestehende Antriebskonfiguration der Drehmaschine von der neu hinzugefügten Aktorik für die Anregung des Drehwerkzeuges 3 mit einer Schwingungsunterstützung abgrenzen. Ein weiterer Unterschied gegenüber dem ersten Ausführungsbeispiel liegt darin, dass die Kupplung, welche das Schubkurbelgetriebe 13 mit dem rotatorischen Antrieb (Antrieb der Werkzeugmaschine) 10 verbindet, durch eine schaltbare Kupplung 16, beispielsweise eine hydraulisch oder pneumatisch schaltbare Zapfwelle, gebildet ist. Hiermit wird eine weitere Möglichkeit geschaffen die bzw. das auf das Getriebe 13 übertragene Drehzahl und / Drehmoment und somit die Frequenz der angeregten Schwingung einzustellen. Die Amplitude wird durch das Getriebe generiert und kann optional durch eine Verstellung des Getriebes reguliert werden. Diese Verstellung des Getriebes kann manuell, durch einen eigenen Antrieb in Verbindung mit zusätzlichen Indexierungen oder Kupplungen oder durch ein zusätzliches Stellgetriebe erfolgen.

Ein letzter Unterschied besteht darin, dass aufgrund der Anordnung des Antriebes (Antriebes der Werkzeugmaschine) 10 die Koppelstange 25, deren eines Ende wieder über ein Festlager 26 auf dem Exzenter des Doppelexzenters 20 mit variabler Exzentrizität e(t) drehbar gelagert ist, nicht seriell in derselben Ebene (wie in Fig. 1) mit dem Schaft 4 verbunden ist, sondern räumlich parallel in einer (in z-Richtung) höhenversetzten Ebene in Bezug auf den Schaft 4 verläuft. Um die Einleitung einer Schwingung in den Schaft 4 zu ermöglichen, ist das andere Ende der Koppelstange 25 daher über ein Loslager 28 an einer mit der Koppel 17 fest verbundenen Verbindungsstange 29 drehbar gelagert. Diese Verbindungsstange 29 überbrückt den Höhenunterschied (in z-Richtung) zwischen den zueinander parallelen Ebenen des Schaftes 4 und der Koppelstange 25 und sorgt dafür, dass über die Koppel 17 die Schwingungsbewegung in den Schaft 4 eingeleitet wird und damit die Vorschubbewegung überlagert.

### Drittes Ausführungsbeispiel (nicht erfindungsgemäß)

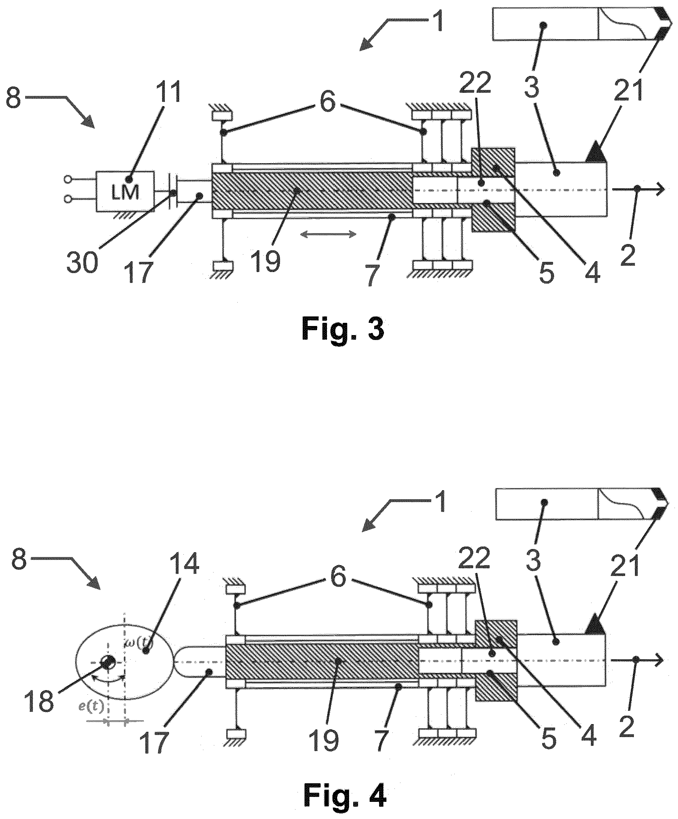

Beim dritten Ausführungsbeispiel nach Fig. 3 ist der Antrieb 11 in der Einheit 8 zur Schwingungsanregung als separater Eigenantrieb des Aktors 1 in Form eines Linearantriebs ausgebildet. Für einen solchen Linearantrieb 11 kann beispielsweise auf einen Linearmotor zurückgegriffen werden, der nach dem piezoelektrischen, elektrostatischen, elektromagnetischen, magnetostriktiven oder thermoelektrischen Wirkprinzip arbeitet.

Durch eine geeignete elektrische Ansteuerung des Linearantriebes 11 kann dieser die (hinsichtlich Frequenz und Amplitude) gewünschte Schwingungsform anregen. Da der Linearantrieb 11 in Fig. 3 so positioniert ist, dass seine Antriebsachse mit der Längsachse 19 des Schaftes 4 fluchtet, kann vorteilhafterweise auf eine zusätzliche Getriebestufe zur Einleitung der Schwingungsbewegung in den Schaft 4 verzichtet werden. Der Linearantrieb 11 ist über eine Kupplung 30 unmittelbar mit der am Schaftende angebrachten Koppel 17 verbunden. Alternativ wäre es hier aber auch vorstellbar, die Schwingungsanregung zwischen den Festkörpergelenken 6 bzw. Festkörpergelenkpaketen in den Schaft 4 einzuleiten. In einem solchen Fall könnte die Antriebsachse des Linearmotors 11 z. B. parallel zur Längsachse 19 des Schaftes 4 verlaufen.

Der Linearmotor 11 übt somit unmittelbar auf den Schaft 4 und das dort eingespannte Drehwerkzeug 3 eine lineare Schwingungsbewegung in Vorschubrichtung 2 aus, wenn das Werkzeug 3 relativ zum Werkstück in Schnittrichtung und in Vorschubrichtung bewegt wird. Die elastische Lagerung mittels der Festkörperanordnung 7 erlaubt aufgrund ihrer hohen Nachgiebigkeit in axialer Richtung eine solche in Vorschubrichtung 2 überlagerte Schwingungsbewegung, wohingegen außeraxiale Kräfte aufgrund der hohen radialen Steifigkeit der elastischen Lagerung in die den Schaft 4 abstützenden Maschinenteile übertragen werden, ohne Deformationen zu verursachen.

### Viertes Ausführungsbeispiel (nicht erfindungsgemäß)

Ein viertes Ausführungsbeispiel des Aktors 1 gemäß Fig. 4 stellt ebenfalls eine besonders kompakte Variante zur Realisierung einer Einheit 8 zur Schwingungsanregung des elastisch gelagerten Schaftes 4 dar.

Das Getriebe zur Umwandlung einer von einem (nicht dargestellten) Antrieb bereitgestellten rotatorischen Antriebsbewegung in eine translatorische Schwingungsbewegung ist hier als Kurvengetriebe ausgebildet, welches lediglich aus einer drehfest auf einer exzentrischen Drechachse 18 sitzenden Kurvenscheibe 14 besteht. Diese Drehachse 18 wird vom Antrieb in Rotation versetzt und ist senkrecht zu und in derselben Ebene wie die Längsachse 19 des Schaftes 4 angeordnet. Auch kann durch eine Verstellung der Kinematik des Getriebes, z. B. durch eine (manuell oder motorisch erfolgende) Veränderung der Exzentrizität e(t) der Kurvenscheibe (14), für eine variable Einstellung der Amplitude der angeregten Schwingung gesorgt werden.

Die Koppel 17 wirkt auf der der Drehachse 18 zugewandten Seite unmittelbar mit der Kurvenscheibe 14 zusammen, welche auf der der Koppel 17 zugewandten Umfangsseite eine Kurvenbahn aufweist. Die Kurvenbahn der Kurvenscheibe 14 weist eine entsprechend der gewünschten Bewegung angepasste Form auf, d. h., dass sich über die Kurvenbahn beim Abwälzen der Koppel 17 eine Längsbewegung in Vorschubrichtung 2 (in Richtung der Schaft-Längsachse 19) erzeugen lässt. Infolgedessen wird der Schaft 4 und das darin eingespannte Drehwerkzeug 3 zu Schwingungen in Vorschubrichtung 2 (senkrecht zur Drehachse 18 der Kurvenscheibe 14) angeregt. Durch eine Variation der Drehzahl und / oder des Drehmomentes, mit dem die Drehachse 18 angetrieben wird, kann wiederum die Frequenz der angeregten Schwingung variiert werden. Darüber hinaus kann durch Austausch der Kurvenscheibe 14 gegen eine andere Kurvenscheibe mit einer anderen umfangsseitigen Kurvenbahn die auf den Schaft 4 und das Werkzeug 3 einwirkende Schwingung verändert werden.

Abschließend wird für alle vier Ausführungsbeispiele festgehalten, dass die Schwingungsbewegung des Werkzeuges 3 in Vorschubrichtung 2, welche die Vorschubbewegung des Werkzeuges 3 in Vorschubrichtung 2 überlagert, bevorzugt auf eine Amplitude im Bereich von 1 bis 500 µm und eine Frequenz im Bereich von 1 bis 500 Hz eingestellt wird. In jedem Fall wird die Amplitude und/oder die Frequenz dieser Schwingungsbewegung aber derart eingestellt, dass die bei der spanenden Bearbeitung des Werkstückes entstehenden Spanformen bestimmte Vorgaben hinsichtlich ihrer äußeren Form und /oder hinsichtlich ihrer Spanraumzahl hinsichtlich ihres Beschädigungspotentiales für das Werkzeug 3 und /oder das Werkstück einhalten. Dies prädestiniert den Einsatz des Aktors 1 für Werkzeugmaschinen in den hohen Qualitäts- und Sicherheitsanforderungen unterliegenden Bereichen des Automobil-, Maschinen- und Formenbaus.

Das hier vorgestellte Aktorkonzept bietet durch die Möglichkeit zur auswechselbaren Einspannung der Werkzeuges 3 in der Wechselschnittstelle 5 und durch die Möglichkeit zur variablen Einstellung der Frequenz und /oder der Amplitude der angeregten Schwingung einen hohen Grad an Flexibilität und kann somit als modulare Einheit in verschiedensten Produktionsprozessen vorteilhaft eingesetzt werden. Des Weiteren bietet dieses Aktorkonzept durch die Lagerung des werkzeugtragenden Schaftes 4 über Festkörpergelenke 6 spiel- und reibungsfreie Lagerstellen für die Führung der Schwingungsbewegung in Vorschubrichtung 2. Die Festkörpergelenke 6 können somit ebenfalls für Anforderungen in verschiedensten Produktionsprozessen ausgelegt werden.

## Patentansprüche

1. Werkzeugmaschine zum spanenden Bearbeiten eines Werkstückes mittels mindestens eines relativ zum Werkstück bewegbaren Werkzeuges (3), umfassend einen rotatorischen Antrieb (10), eine damit verbundene Kupplung (16) und zumindest einen Aktor (1), wobei der Aktor (1) umfasst:
- einen Schaft (4), der an einem Ende mit dem mindestens einen Werkzeug (3) koppelbar ist und an einem gegenüberliegenden Ende mit einer Koppel (17) versehen ist;
- eine aus mehreren Festkörpergelenken (6) gebildete Festkörperanordnung (7) zur elastischen Lagerung des Schaftes (4), wobei die Festkörpergelenke (6) jeweils mit einer Vorspannung versehen sind; und
- eine Einrichtung (8) zur Schwingungsanregung des Schaftes (4) entlang einer Längsachse (19) des Schaftes (4), wobei die Einrichtung (8) zur Schwingungsanregung ein Getriebe (13), das eine rotatorische Antriebsbewegung des Antriebes (10) in eine Schwingungsbewegung in der Richtung der Längsachse (19) des Schaftes (4) umwandelt, umfasst, wobei das Getriebe (13) über die Kupplung (16) mit dem Antrieb (10) und über die Koppel (17) mit dem Ende des Schaftes (4), das dem mit dem mindestens einen Werkzeug (3) koppelbaren Ende des Schaftes (4) gegenüberliegt, verbunden ist, wobei
das Getriebe in Form eines Schubkurbelgetriebes (13) ausgebildet ist, das einen vom Antrieb (10) rotatorisch angetriebenen Doppelexzenter (20) mit variabler Exzentrizität (e(t)) und eine Koppelstange (25), die über ein Festlager (26) auf dem Doppelexzenter (20) sowie über ein Loslager (28) an der Koppel (17) oder an einer mit der Koppel (17) fest verbundenen Verbindungsstange (29) drehbar gelagert ist, umfasst, und wobei die Koppelstange (25) seriell oder parallel in Bezug zum Schaft (4) angeordnet ist.

2. Werkzeugmaschine nach Anspruch 1, wobei der Schaft (4) mindestens eine Wechselschnittstelle (5) zur auswechselbaren Einspannung eines Werkzeuges (3) aufweist.

3. Werkzeugmaschine nach Anspruch 1 oder 2, wobei die Festkörpergelenke (6) zu Paketen zusammengefasst sind.

4. Werkzeugmaschine nach einem der vorhergehenden Ansprüche 1 bis 3, wobei eine Frequenz der angeregten Schwingung mittels des Antriebes (10) variabel einstellbar ist.

5. Werkzeugmaschine nach einem der vorhergehenden Ansprüche 1 bis 4, wobei Elemente des Antriebes (10) und/oder des Getriebes (13) im Wesentlichen in der gleichen horizontalen Ebene wie der Schaft (4) liegen, insbesondere seriell mit dem Schaft (4) gekoppelt sind, und/oder Elemente des Antriebes (10) und/oder des Getriebes (13) räumlich parallel oder kreuzend in Bezug auf den Schaft (4) angeordnet sind.

6. Werkzeugmaschine nach einem der vorhergehenden Ansprüche 1 bis 5, wobei die Kupplung (16) als eine schaltbare Kupplung (16), wie eine elektromechanisch, hydraulisch oder pneumatisch schaltbare Zapfwelle, ausgebildet ist.

7. Werkzeugmaschine nach einem der vorhergehenden Ansprüche 1 bis 6, wobei der Aktor (1) mit einer inneren Kühl- und/oder Schmierstoffzufuhr für das damit zu koppelnde mindestens eine Werkzeug (3) ausgestattet ist.

8. Werkzeugmaschine nach einem der vorhergehenden Ansprüche 1 bis 7, wobei die Werkzeugmaschine eine Dreh-, Fräs- oder Bohrmaschine ist.

9. Werkzeugmaschine nach einem der vorhergehenden Ansprüche 1 bis 8, ferner umfassend mindestens ein Werkzeug (3), wobei der Schaft (4) mit dem mindestens einen Werkzeug (3) gekoppelt ist, und wobei der Aktor (1) derart angeordnet ist, dass die Längsachse (19) des Schaftes (4) mit einer Vorschubrichtung (2) des mindestens einen Werkzeuges (3) übereinstimmt.

10. Verfahren zum spanenden Bearbeiten eines Werkstückes mittels mindestens eines in Vorschubrichtung (2) relativ zu einem Werkstück bewegbaren Werkzeuges (3) und unter Verwendung einer in einem der vorhergehenden Ansprüche 1 bis 9 definierten Werkzeugmaschine, umfassend den folgenden Schritt:
- Überlagern der in Vorschubrichtung (2) erfolgenden Vorschubbewegung des mindestens einen Werkzeuges (3) mit einer in der gleichen Richtung erfolgenden Schwingungsbewegung, wobei eine Amplitude und/oder eine Frequenz dieser Schwingungsbewegung derart eingestellt wird, dass die bei der spanenden Bearbeitung des Werkstückes entstehenden Spanformen bestimmte Vorgaben hinsichtlich ihrer äußeren Form und/oder hinsichtlich ihrer Spanraumzahl und/oder hinsichtlich ihres Beschädigungspotentiales für das Werkzeug (3) und/oder das Werkstück einhalten.

## Claims

1. Machine tool for machining a workpiece by means of at least one tool (3) movable relative to the workpiece, comprising a rotary drive (10), a coupling (16) connected thereto and at least one actuator (1), wherein the actuator (1) comprises:
• a shaft (4), which is couplable at one end to the at least one tool (3) and is provided at an opposite end with a link (17);
• a flexure arrangement (7) formed from a plurality of flexure hinges (6) for elastically mounting the shaft (4), wherein the flexure hinges (6) are each provided with a preload; and
• a device (8) for exciting oscillation of the shaft (4) along a longitudinal axis (19) of the shaft (4), wherein the device (8) for exciting oscillation comprises a transmission (13) which converts a rotary drive movement of the drive (10) into an oscillating movement in the direction of the longitudinal axis (19) of the shaft (4), wherein the transmission (13) is connected via the coupling (16) to the drive (10) and via the link (17) to the end of the shaft (4) which is opposite the end of the shaft (4) couplable to the at least one tool (3), wherein
the transmission is configured in the form of a slider-crank mechanism (13) comprising a double eccentric (20), which is rotationally driven by the drive (10) and has a variable eccentricity (e(t)), and a connecting rod (25), which is rotatably mounted via a fixed bearing (26) on the double eccentric (20) and via a floating bearing (28) on the link (17) or on a connecting rod (29) fixedly connected to the link (17), and wherein the connecting rod (25) is arranged in series or in parallel with respect to the shaft (4).

2. Machine tool according to claim 1, wherein the shaft (4) has at least one interchangeable interface (5) for interchangeably clamping a tool (3).

3. Machine tool according to claim 1 or 2, wherein the flexure hinges (6) are grouped into packages.

4. Machine tool according to any one of the preceding claims 1 to 3, wherein a frequency of the excited oscillation is variably adjustable by means of the drive (10).

5. Machine tool according to any one of the preceding claims 1 to 4, wherein elements of the drive (10) and/or of the transmission (13) lie substantially in the same horizontal plane as the shaft (4), in particular are coupled in series with the shaft (4), and/or elements of the drive (10) and/or of the transmission (13) are arranged spatially parallel to or crossing with respect to the shaft (4).

6. Machine tool according to any one of the preceding claims 1 to 5, wherein the coupling (16) is configured as a switchable coupling (16), such as an electromechanically, hydraulically or pneumatically switchable power take-off shaft.

7. Machine tool according to any one of the preceding claims 1 to 6, wherein the actuator (1) is equipped with an internal coolant and/or lubricant supply for the at least one tool (3) to be coupled thereto.

8. Machine tool according to any one of the preceding claims 1 to 7, wherein the machine tool is a lathe, milling machine or drilling machine.

9. Machine tool according to any one of the preceding claims 1 to 8, further comprising at least one tool (3), wherein the shaft (4) is coupled to the at least one tool (3), and wherein the actuator (1) is arranged such that the longitudinal axis (19) of the shaft (4) coincides with a feed direction (2) of the at least one tool (3).

10. Method for machining a workpiece by means of at least one tool (3) movable relative to a workpiece in a feed direction (2) and using a machine tool defined in any one of the preceding claims 1 to 9, comprising the following step:
• superimposing, on the feed movement of the at least one tool (3) taking place in the feed direction (2), an oscillating movement taking place in the same direction, wherein an amplitude and/or a frequency of this oscillating movement is adjusted such that the chip shapes produced during machining of the workpiece comply with specified requirements with regard to their external shape and/or with regard to their chip space factor and/or with regard to their damage potential for the tool (3) and/or the workpiece.

## Revendications

1. Machine-outil destinée à l'usinage par enlèvement de copeaux d'une pièce au moyen d'au moins un outil (3) mobile par rapport à la pièce, comprenant un entraînement rotatif (10), un accouplement (16) relié à celui-ci et au moins un actionneur (1), l'actionneur (1) comprenant :
• un arbre (4), qui peut être accouplé à une extrémité à l'au moins un outil (3) et qui est pourvu, à une extrémité opposée, d'une bielle (17) ;
• un agencement flexible (7) formé de plusieurs articulations flexibles (6) pour le support élastique de l'arbre (4), les articulations flexibles (6) étant chacune pourvues d'une précontrainte ; et
• un dispositif (8) d'excitation vibratoire de l'arbre (4) le long d'un axe longitudinal (19) de l'arbre (4), le dispositif (8) d'excitation vibratoire comprenant une transmission (13) qui transforme un mouvement d'entraînement rotatif de l'entraînement (10) en un mouvement oscillatoire dans la direction de l'axe longitudinal (19) de l'arbre (4), la transmission (13) étant reliée, par l'intermédiaire de l'accouplement (16), à l'entraînement (10) et, par l'intermédiaire de la bielle (17), à l'extrémité de l'arbre (4) qui est opposée à l'extrémité de l'arbre (4) pouvant être accouplée à l'au moins un outil (3), dans laquelle
la transmission est réalisée sous la forme d'un mécanisme bielle-manivelle (13) comprenant un double excentrique (20), entraîné en rotation par l'entraînement (10) et présentant une excentricité variable (e(t)), et une bielle (25), qui est montée rotative, par l'intermédiaire d'un palier fixe (26), sur le double excentrique (20) ainsi que, par l'intermédiaire d'un palier libre (28), sur la bielle (17) ou sur une tige de liaison (29) reliée de manière fixe à la bielle (17), et dans laquelle la bielle (25) est disposée en série ou en parallèle par rapport à l'arbre (4).

2. Machine-outil selon la revendication 1, dans laquelle l'arbre (4) présente au moins une interface interchangeable (5) pour le serrage interchangeable d'un outil (3).

3. Machine-outil selon la revendication 1 ou 2, dans laquelle les articulations flexibles (6) sont regroupées en ensembles.

4. Machine-outil selon l'une quelconque des revendications précédentes 1 à 3, dans laquelle une fréquence de la vibration excitée est réglable de manière variable au moyen de l'entraînement (10).

5. Machine-outil selon l'une quelconque des revendications précédentes 1 à 4, dans laquelle des éléments de l'entraînement (10) et/ou de la transmission (13) se trouvent sensiblement dans le même plan horizontal que l'arbre (4), en particulier sont accouplés en série avec l'arbre (4), et/ou des éléments de l'entraînement (10) et/ou de la transmission (13) sont disposés parallèlement dans l'espace ou de manière croisée par rapport à l'arbre (4).

6. Machine-outil selon l'une quelconque des revendications précédentes 1 à 5, dans laquelle l'accouplement (16) est réalisé sous la forme d'un accouplement commutable (16), tel qu'un arbre de prise de force commutable de manière électromécanique, hydraulique ou pneumatique.

7. Machine-outil selon l'une quelconque des revendications précédentes 1 à 6, dans laquelle l'actionneur (1) est équipé d'une alimentation interne en fluide de refroidissement et/ou en lubrifiant pour l'au moins un outil (3) à accoupler à celui-ci.

8. Machine-outil selon l'une quelconque des revendications précédentes 1 à 7, dans laquelle la machine-outil est un tour, une fraiseuse ou une perceuse.

9. Machine-outil selon l'une quelconque des revendications précédentes 1 à 8, comprenant en outre au moins un outil (3), dans laquelle l'arbre (4) est accouplé à l'au moins un outil (3), et dans laquelle l'actionneur (1) est disposé de telle sorte que l'axe longitudinal (19) de l'arbre (4) coïncide avec une direction d'avance (2) de l'au moins un outil (3).

10. Procédé d'usinage par enlèvement de copeaux d'une pièce au moyen d'au moins un outil (3) mobile par rapport à une pièce dans une direction d'avance (2) et en utilisant une machine-outil définie dans l'une quelconque des revendications précédentes 1 à 9, comprenant l'étape suivante :
• superposer, au mouvement d'avance de l'au moins un outil (3) effectué dans la direction d'avance (2), un mouvement oscillatoire effectué dans la même direction, une amplitude et/ou une fréquence de ce mouvement oscillatoire étant réglée de telle sorte que les formes de copeaux produites lors de l'usinage par enlèvement de copeaux de la pièce respectent des exigences déterminées concernant leur forme extérieure et/ou leur coefficient d'encombrement des copeaux et/ou leur potentiel d'endommagement pour l'outil (3) et/ou la pièce.
